# EUROPEAN PATENT APPLICATION

(11) **EP 4 703 921 A1**
(43) Date of publication of application: **04.03.2026**
(21) Application number: 24382937.1
(22) Date of filing: 30.08.2024
(51) Int. Cl.: G06F 21/31, G06N 20/00, H04M 3/22

(54) **SYSTEM AND METHOD FOR DETECTION AND BLOCKING OF FLASH CALLS**

(71) Applicant: Vodafone Group Services Limited, Newbury RG14 2FN (GB)
(72) Inventor: HOU, Jindong, London, W2 6BY (GB); LAU, Fiona, London, W2 6BY (GB)
(74) Representative: Boult Wade Tennant LLP

(57) **Abstract**

There is provided a method for training a machine learning model for identifying flash calls in a set of Call Detail Records, CDRs, the method comprising: receiving a set of CDRs and a set of call network data; creating a first training set, the first training set comprising a first subset of CDRs from the set of CDRs and a second subset of CDRs from the set of CDRs, wherein the first subset of CDRs comprises a plurality of CDRs known to represent flash calls, and the second subset of CDRs comprises a plurality of CDRs known to represent legitimate calls; determining one or more characteristic features in the first training set, the one or more characteristic features comprising a first characteristic feature associated with the first subset of CDRs and a second characteristic feature associated with the second subset of CDRs, wherein the first characteristic feature is different from the second characteristic feature.

## Description

### FIELD OF THE INVENTION

The present disclosure relates to the handling of unwanted calls in mobile networks. Specifically, the disclosure relates to detection, classification, and blocking of calls used to provide one-time passwords for two-factor authentication.

### BACKGROUND

Flash calls are a method for providing a one-time password (OTP) for two-factor authentication (2FA). Flash calling represents an alternative to using short message service (SMS) messages to deliver an OTP as a second factor authentication for a service.

Instead of sending a SMS message containing an OTP to a user, the flash call service provider makes a phone call to a target device, such as a destination phone. This phone call is immediately terminated when the target device starts to ring. All or part of the caller identity (CallerID) of the missed call can then be used as an OTP, either by manually entering the CallerID into an application, or automatically via an application with the appropriate device permissions to view the device call logs.

Flash calls provide a lower cost compared to SMS messages to the flash call service provider, because the flash call operator will not incur any costs for calls that are not answered. However, flash calls increase costs for the mobile network operator (MNO), due to a high volume of missed calls, as well as increasing the burden on the network due to increased activity (e.g., paging mobiles over the radio access network, carrying signalling traffic over interconnect routes, reserving network bandwidth for a telephone call that never completes). Therefore, unidentified flash calls are undesirable for the MNO.

The Global System for Mobile Communications Association (GSMA) has identified a framework within which flash call service providers and MNOs can collaborate to appropriately handle flash calls (both in respect of mobile network handling as well as ensuring fair compensation for MNOs). However, less legitimate flash call service providers generally seek to avoid mechanisms by which their flash calls can be identified, in order to avoid incurring costs.

### SUMMARY OF THE INVENTION

There is provided a method for training a machine learning model for identifying flash calls in a set of Call Detail Records, CDRs, the method comprising: receiving a set of CDRs and a set of call network data; creating a first training set, the first training set comprising a first subset of CDRs from the set of CDRs and a second subset of CDRs from the set of CDRs, wherein the first subset of CDRs comprises a plurality of CDRs known to represent flash calls, and the second subset of CDRs comprises a plurality of CDRs known to represent legitimate calls; determining one or more characteristic features in the first training set, the one or more characteristic features comprising a first characteristic feature associated with the first subset of CDRs and a second characteristic feature associated with the second subset of CDRs, wherein the first characteristic feature is different from the second characteristic feature.

### BRIEF DESCRIPTION OF THE DRAWINGS

Further details, aspects and embodiments of the invention will be described, byway of example only, with reference to the drawings. In the drawings, like reference numbers are used to identify like or functionally similar elements. Elements in the figures are illustrated for simplicity and clarity and have not necessarily been drawn to scale.
Figure 1 shows a block diagram of a system for carrying out detection of flash calls, in accordance with examples of the present disclosure.
Figure 2 shows a block diagram of a system for detecting and blocking flash calls, in accordance with examples of the present disclosure.
Figure 3 shows a network timing diagram of a delayed call setup call intervention, in accordance with examples of the present disclosure.
Figure 4 shows a flowchart of a method of a call intervention action comprising blocking and monitoring, in accordance with examples of the present disclosure.
Figure 5 shows a flowchart of a method of a call intervention action comprising diverting the call to a voicemail service, in accordance with examples of the present disclosure.
Figure 6 shows a flowchart of a method of a call intervention action comprising diverting the call to a network announcement service, in accordance with examples of the present disclosure.

### DETAILED DESCRIPTION

In the following description, for purposes of explanation, numerous specific details of certain examples are set forth. Reference in the specification to "an example" or similar language means that a particular feature, structure, or characteristic described in connection with the example is included in at least that example, but not necessarily in other examples.

The systems and methods described herein are concerned with two aspects for the prevention of undesired flash calls. Firstly, calls are analysed in order to determine whether a call is likely to be a flash call. Secondly, an appropriate action is carried out in order to prevent or reduce unwanted flash calls from being successfully connected to a target device.

Flash calls can exhibit distinctive call patterns. However, traditional rule-based methods of detecting flash calls fall short in both accuracy and efficiency. Therefore, an alternative approach to detecting flash calls is required, in order to capably handle the large amount of complicated modern telecommunication data.

The methods disclosed herein make use of machine learning systems which use both call network data and a set of indicative features and attributes to facilitate improved flash call detection. The disclosed methods outperform traditional rule-based methods both in terms of accuracy and operational efficiency.

Flash call detection may comprise one or more of the steps of: data collection, feature engineering, and machine learning. Data collection may comprise collection of call detail records (CDRs), and/or call network data for processing. Collection of CDRs may comprise aggregating CDRs along with call network data. CDRs may comprise one or more of call origin, call duration, call frequency, and network characteristics. Call network data may comprise transaction records of the call control signalling (SIP) used, in particular the sequence of SIP messages and the parameters transmitted within each message.

Feature engineering comprises determining a set of features or attributes that can be used as an input to a machine learning model to distinguish flash calls from other (`normal') call activity. The feature engineering may comprise analysing one or more factors, the one or more factors including one or more of a subscriber duration, a network duration, a duration of ringing, a post dial delay, whether or not a call is answered, a number of originated calls, a number of received calls, a call release direction, a call release cause, a redirecting number, and similar.

For the factor of duration of ringing, a CallerID associated with a flash call service provider will generally have a significantly shorter call duration compared to those of a CallerID associated with a legitimate caller. For example, a duration of ringing of a flash call (i.e. duration between a 182 (Session Progress) and a CANCEL, or a duration between an 18x_invite time and an end_time) may typically be under 1000ms to 2000ms, with a low variance in durations. A duration of ringing of a legitimate caller may typically be much longer durations and have a high variance in durations of ringing. Entropy (i.e. a variability of attributes such as duration of ringing) may itself be used to determine whether a call is likely to be a flash call. For a factor of subscriber duration (i.e. duration of the call), a flash call when picked up will generally have a low subscriber duration compared to legitimate callers. For example, a subscriber duration associated with a flash call may typically be under 1000ms, but may be as low as 80ms, which is rarely observed in normal calls.

For the factor of whether or not a call is answered, a CallerID associated with a flash call service provider will generally have a very low number of answered calls, where the call is not answered in most cases, whereas a CallerID associated with a legitimate caller will generally have a high rate of answered calls, where a call originating from the CallerID is answered in most cases.

For the factor of a number of originated calls, a CallerID associated with a flash call service provider will generally exhibit only one or two calls within an observation window, as a large number of different CallerIDs are operated by a single flash call service provider in order to facilitate a range of OTPs. A CallerID associated with a legitimate user will generally display a random number of initiated calls in an observation window with a high variance distribution.

For the factor of a number of received calls, a CallerID associated with a flash call service provider will typically receive zero calls. A CallerID associated with a legitimate user will generally exhibit a number of received calls with a greater variance, where a non-zero number of received calls is an indicator that a CallerID is associated with a legitimate user.

For the factor of a call release direction, a CallerID associated with a flash call service is likely to show a release direction of 'ingress', which indicates that the call is cancelled by the originating party prior to the call being picked up by the receiving party. In some examples, flash calls may exhibit both release directions (`ingress' and 'egress').

For the factor of a call release cause, a CallerID associated with a flash call service is likely to show a release cause of CANCEL ('CAN'), which indicates a non-established call. In some examples, a CallerID associated with a flash call service may be likely to show a release cause of one or more of: 486 (Busy Here), Cancel, 480 (Temporarily Unavailable), Bye.

In some examples, a CDR may be analysed on its own. In some examples, multiple CDRs may be grouped by prefix and analysed as a set, where each CDR in the set has a common CallerID prefix. A given flash call number (CallerID) can have one or multiple occurrences in a CDR dataset. Therefore, the values attributed to characteristics for distinguishing flash calls may be represented as a single value, a mean value, a median value, or similar. In some examples, the values attributed to characteristics for distinguishing flash calls may be represented as a percentile value across all numbers under the same prefix. It will be appreciated that various similar representative values indicative of flash call characteristics may be used or derived from the CDRs, including various statistical or representative values.

If a data analysis on a given set of CDRs has identified distinctive flash call number distributions in CDRs, such as an adjacent neighbours distance, a common prefix, a cycle-based Gauss-Newton (CGN) sequentially, an orderliness, or similar, then such engineered features may be used for training of the machine learning module and inference performed thereon.

Machine learning for detecting flash calls may comprise training a machine learning model on a labelled dataset in orderto identify flash calls based on the engineered attributes and associated call network data.

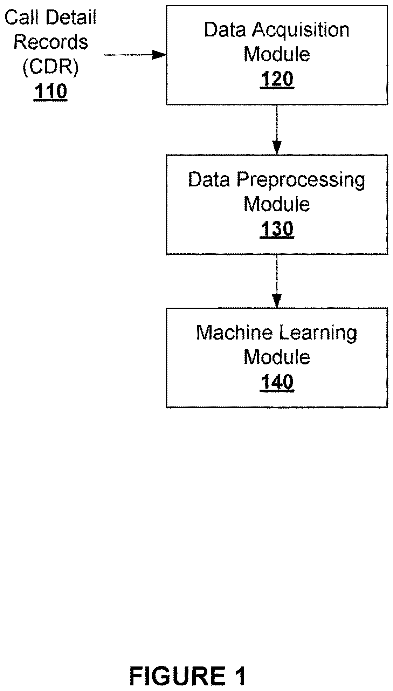

Figure 1 shows a system for carrying out detection of flash calls, in accordance with examples of the present disclosure. A Data Acquisition Module 120 is arranged to receive one or more Call Detail Records (CDRs) 110. The Data Acquisition Module 120 may be further operable to receive a set of call network data. A Data Preprocessing Module 130 is operable to receive the one or more CDRs 110 from the Data Acquisition Module 120, and determine one or more characteristic features associated with a subset of the one or more CDRs, wherein said characteristic feature may be indicative of one of a flash call or a legitimate call. A Machine Learning Module 140 is operable to determine, based on one or more determined characteristic features, a flash call classification associated with the one or more CDRs 110.

In some examples, a system for carrying out detection of flash calls may further comprise a training set generation module. The training set generation module may be operable to create a first training set. The first training set may comprise a first subset of CDRs from a set of CDRs and a second subset of CDRs from the set of CDRs. The first subset of CDRs may comprise a plurality of CDRs known to represent flash calls, and the second subset of CDRs may comprise a plurality of CDRs known to represent legitimate calls. In some examples, the training set generation module may be a part of one of a Data Acquisition Module or a Data Preprocessing Module.

A Machine Learning Module, such as Machine Learning Module 140 of Figure 1, may generate a list of CallerIDs associated with potential flash calling behaviour. This list can be used by an active part of the mobile network in order to determine whether to perform one or more intervention actions. In examples, the machine learning model may classify a CallerID based on a risk category or risk score, wherein the intervention action performed varied depending on the risk category or risk score with which the CallerID is associated.

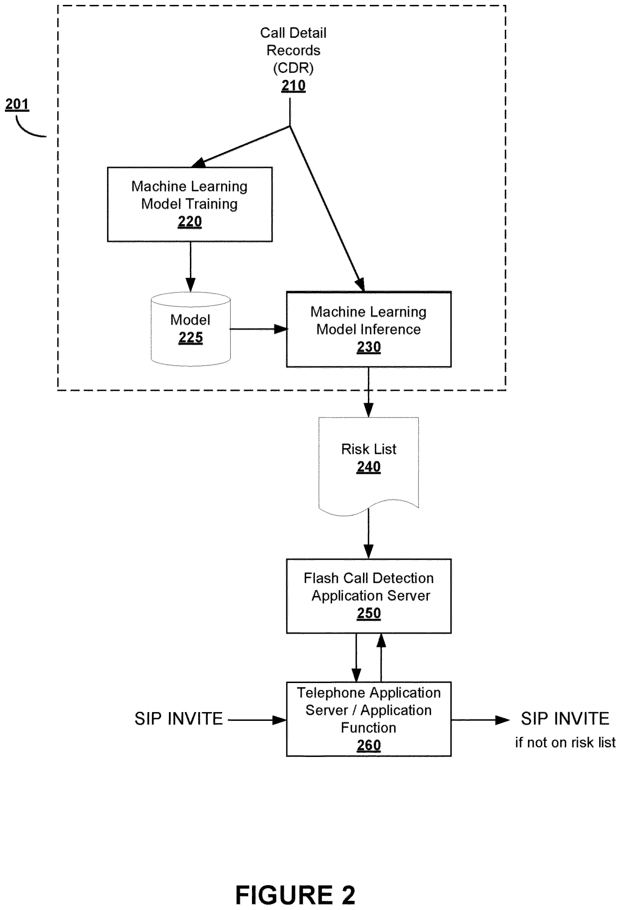

Figure 2 shows a system for detecting and blocking flash calls, in accordance with examples of the present disclosure. The system of Figure 2 comprises a module arranged to receive CDRs 210 and carry out machine learning model training 220 based on said CDRs 210, in order to train a model 225. A module arranged to receive CDRs 210 and carry out machine learning model inference 230 on the basis of the model 225.

The machine learning model inference 230 is operable to generate a risk list 240, said risk list 240 comprising a list of CallerIDs along with an associated risk category or risk score. In some examples, the risk list 240 may simply indicate a list of CallerIDs known to be or likely to be associated with a flash call service. In some examples, the risk list 240 may associate a risk category or a risk score to each CallerID of a list of CallerIDs, the risk category or risk score indicating a likelihood or confidence that a particular CallerID is associated with a flash call service.

A flash call detection application server 250 is operable to access the risk list 240 and communicate an appropriate action to take for a given CallerID to the TAS/AF. A Telephone Application Server / Application Function (TAS/AF) 260 is operable to receive a SIP INVITE message from a prospective caller. In the event that the risk list 240 indicates that the CallerID of the prospective caller is not associated, or likely not associated, with a flash call service, then the SIP INVITE message may be passed on to a target device by the TAS/AF 260. The TAS/AF 260 provides general mobile terminated and mobile originated call functions. The flash call detection application server 250 provides functions specific to additional service(s) provided to the UE, such as a flash call protection service. The TAS/AF 260 may determine which specialised application server, such as the flash call detection application server 250, to include in a given call. The flash call detection application server 250, when receiving a request from the TAS/AF 260, may look for a match between the risk list 240 and an actual calling number (CallerID), and will then instruct the TAS/AF 260 to take appropriate action (connecting, blocking, or another intervention action) based on the risk list 240 and configured logic relating to how specific risk calls should be handled.

According to examples, a caller may make a call to a called number, which `belongs' to the mobile network operator (MNO). This call comes through the TAS, and the TAS will query the flash call detection application server to check if the caller number is deemed likely to be a flash call in a risk list. Then, if the caller number is not considered to be a likely flash call, the flash call detection application server will send back a response to the TAS with "continue" so that the TAS will progress the call normally. If the caller is deemed likely to be a flash call, there are a number of intervention actions that the flash call detection application server can instruct TAS to perform.

The elements depicted within region 201 of Figure 2 can be considered to be the detection aspect of the process. In some examples, the elements in region 201 can be carried out continuously. In some examples, the elements in region 201 can be carried out following a predefined model update period or model refresh period.

Where the machine learning model indicates that a CallerID is in a low-risk category or has a low risk score, then the call may be determined as unlikely to be a unwanted flash call. In such a case, the call may be permitted to connect to a target device without performing any further intervention action. Where the machine learning model indicates that a CallerID is in a high-risk category or has a high risk score, then the call may be determined with high certainty to be a flash call. In such a case, the call may be immediately blocked from connecting to the target device, and without any further intervention action. In examples, the model may output a probability of a CallerID being associated with a flash call, wherein the probability is compared against thresholds for high, low or medium risk calls, and the respective actions are adjusted based on the threshold.

Where the machine learning model indicates that a CallerID is in a medium-risk category or has a medium risk score, then the call may be determined as a possible flash call. In such a case, one or more call intervention actions may be performed in order to prevent a flash call from properly connecting whilst minimising the impact on a legitimate user. The medium-risk category or medium risk score may be used in order to handle situations where there is a lower certainty as to correct identification of a flash call, so as to account for false-positive and false-negative detections. As such, the methods disclosed herein of implementing call intervention actions provide an improved quality of service to users.

Whilst the example(s) provided herewith describe a three-category system (low-, medium-, and high-risk), it will be appreciated that more categories may be defined, with categories offering more varied call intervention actions depending on a confidence of accurate detection, a specific identified feature or behaviour of the CallerID, or similar.

In examples, a risk category or risk score may be compared to a threshold in order to determine which call intervention action of a plurality of call intervention actions to implement. In examples, the threshold(s) are applied by a flash call detection application server or a Telecoms Application Server (TAS).

According to some examples or embodiments, a call intervention action may comprise delaying a call setup. Delaying a call setup may comprise delaying the establishment of the call for a predefined delay period. Delaying the call setup may further comprise providing a `fake' ringing indication to the user. The `fake' ringing indication may comprise one of a Session Initiation Protocol (SIP) 183 session progress message, or a SIP 180 ringing message.

By delaying the call setup whilst providing a ringing indication, an automated flash call service will 'think' that it has received an indication that the call has successfully routed to the target device and that the device is ringing, and thus the automated flash call service will terminate the call in order to avoid the call being answered. However, despite the ringing indication suggesting otherwise, the call will not in fact be routed to the target device until after the delay period has passed. Therefore, the flash call will have been unsuccessful in delivering a OTP to the target device. Alternatively, a legitimate caller will exhibit behaviour following that of a human user (as opposed to the automated calling of the flash call service), and will simply wait for the call to be answered. In this way, the flash call is prevented without adversely affecting a legitimate caller from being routed with their desired recipient.

In some examples, the predefined delay period may be between approximately 100ms and approximately 500ms. In examples, the predefined delay period may be approximately 300ms. In some examples, the predefined delay period may be a fixed duration for each time the call intervention action is implemented. In some examples, the predefined delay period may be random within a certain range. A random delay period makes it more difficult for a flash call service to circumvent the delay simply by waiting longer, because waiting too long risks the call being answered, which is considered undesirable by the flash call service provider.

Where delaying of a call setup is applied as a call intervention action, the ultimate success or failure of the call may be fed back into the machine learning model, such that the model may further improve predictions of flash calls on the basis of the behaviour of callers in response to the call intervention action.

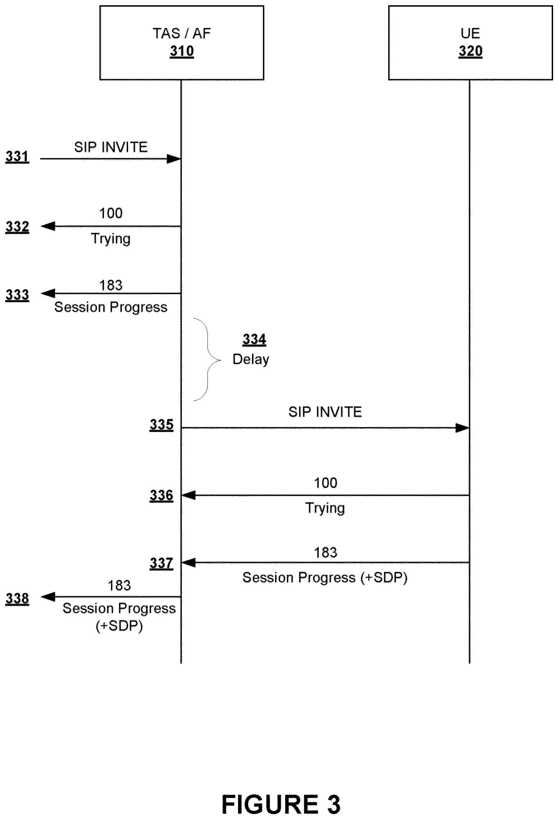

Figure 3 shows a network timing diagram of a delayed call setup call intervention, in accordance with examples of the present disclosure. The network timing diagram shows a Telecoms Application Server (TAS) 310, and a User Equipment (UE) 320. A SIP INVITE message (331) is received at the TAS/AF 310. In response to determining that a Calling Line Identification (CLI) associated with the SIP INVITE message (331) is a suspected flash caller, a SIP 100 Trying message (332) is returned from the TAS/AF 310 to the sender of the SIP INVITE message (331). A SIP 183 Session Progress message (333) is then returned from the TAS/AF 310 to the sender of the SIP INVITE message (331). The TAS/AF 310 then implements a delay (334) before proceeding to send a SIP INVITE message (335) to the UE 320. The UE 320 responds to the TAS/AF 310 with a SIP 100 Trying message (336), followed by a SIP 183 Session Progress message including an SDP (337). In response to receiving the SIP 183 Session Progress message including an SDP (337) from the UE 320, the TAS/AF 310 sends a SIP 183 Session Progress message including an SDP (338) to the sender of the initial SIP INVITE message (331).

According to some examples or embodiments, a call intervention action may comprise blocking the suspected flash call from connecting to the target device, followed by monitoring the appropriate mobile network connection to determine whether a SMS message is sent to the target device shortly following the failed (blocked) call. In particular, as an example, it may be monitored to see whether a subsequent SMS message has a same CallerID (or SMS originating address) as the CallerID of the failed (blocked) call. If it is determined that a SMS from the same CallerID is sent within a predefined period following the failed call, it may be determined that this is indicative of a flash call, and thus the machine learning model may be updated in response to the 'follow-up SMS' behaviour of the suspected flash caller. If the CallerID did not match, this insight can be used by the model as an indication of a OTP being delivered using a different CallerID (originating address), and therefore increasing confidence that the original call was a flash call attempt. In examples, the monitoring may be limited to the metadata of the SMS message, and not the content of the message itself, in order to ensure user privacy. This method of call intervention action may be applied where the risk category or risk score indicates a high confidence as to the call being a flash call.

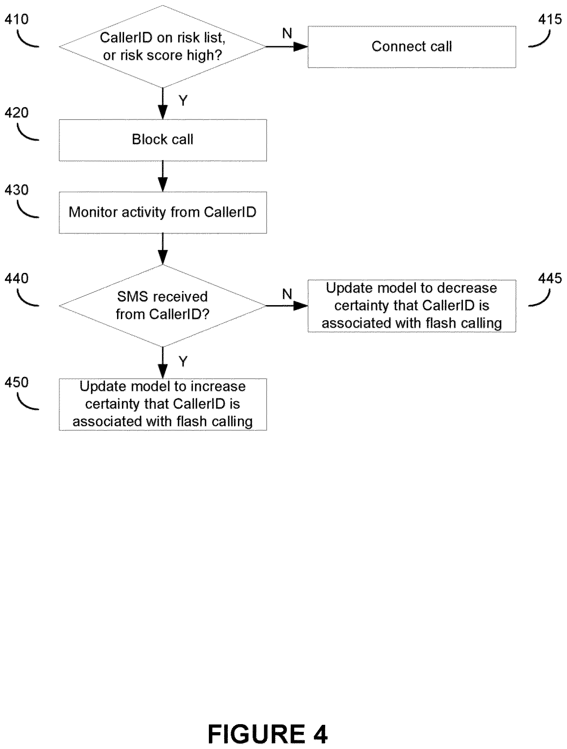

Figure 4 shows a flowchart of a method of a call intervention action comprising blocking and monitoring, in accordance with examples of the present disclosure. At step 410, it is determined whether a CallerID of an incoming call is on a risk list, or if the risk score is sufficiently high. If the CallerID is not determined to be on a risk list, then the method proceeds to step 415. If the CallerID is determined to be on a risk list, then the method proceeds to step 420. At step 415, in response to determining that the CallerID is not on the risk list, the call is connected to the intended target device. In some examples, based on an evaluation of the risk score, other intervention actions may be performed, based on an intervention action with a highest exceeded risk score threshold. At step 420, in response to determining that the CallerID is on the risk list, the call is blocked, refused, or failed, or in some other way prevented from connecting to the intended target device. At step 430, activity originating from the CallerID is monitored for sending of any SMS messages in a time period following the failed call attempt. At step 440 it is determined whether an SMS message is received from the CallerID at the target device. If an SMS message is not determined to have been received from the CallerID at the target device, then the method proceeds to step 445. If an SMS message is determined to have been received from the CallerID at the target device, then the method proceeds to step 450. At step 445, in response to determining that an SMS message is not received from the CallerID at the target device, the machine learning model is updated to decrease a certainty that the particular CallerID is associated with flash calling. At step 450, in response to determining that an SMS message is received from the CallerID at the target device, the machine learning model is updated to increase a certainty that the particular CallerID is associated with flash calling.

According to some examples or embodiments, a call intervention action may comprise diverting the suspected flash call to a voicemail service of the user of the target device. By diverting the call to a voicemail service, the flash calling service is disrupted as the call is not delivered to the target device, and so the CallerID is not deposited. In the case that an incorrect detection causes a false positive, a legitimate caller will still have the opportunity to leave a message on the voicemail service. This method of call intervention action may be applied where the risk category or risk score indicates a low confidence as to the call being a flash call, or where there is a higher potential for false positives.

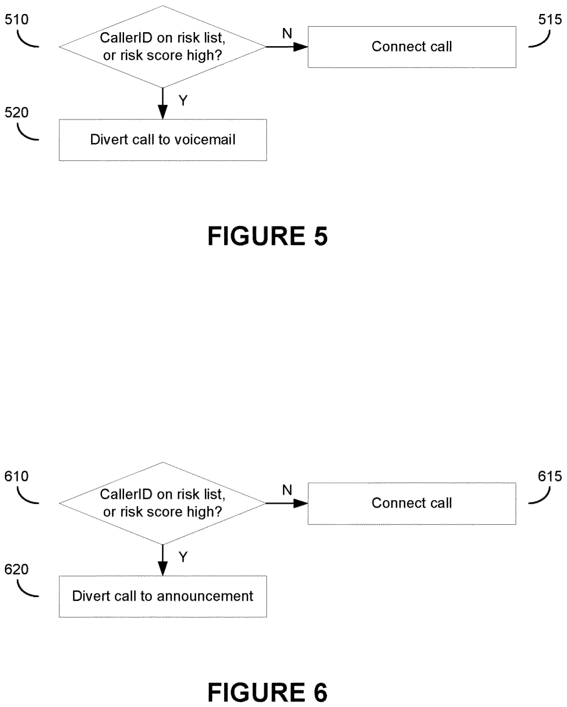

Figure 5 shows a flowchart of a method of a call intervention action comprising diverting the call to a voicemail service, in accordance with examples of the present disclosure. At step 510, it is determined whether a CallerID of an incoming call is on a block list. If the CallerID is not determined to be on a block list, then the method proceeds to step 515. If the CallerID is determined to be on a block list, then the method proceeds to step 520. At step 515, in response to determining that the CallerID is not on the block list, the call is connected to the intended target device. At step 520, in response to determining that the CallerID is on the block list, the call is diverted to a voicemail service associated with the target device.

According to some examples or embodiments, a call intervention action may comprise diverting the suspected flash call to a network announcement service, before failing the call. The network announcement service may playback an announcement message informing the caller that the call has been blocked due to identification of suspicious activity. The announcement message may further inform the caller that they may contact a MNO or service provider if they think that the call has been blocked in error. In some examples, the announcement message may be a prerecorded announcement message. In some examples, the announcement message may be a computer generated announcement message using a text-to-speech service. In some examples, a duration for which the caller remains connected during the announcement may be monitored. This method of call intervention may be applied where the risk category or risk score indicates a high confidence as to the call being a flash call.

Figure 6 shows a flowchart of a method of a call intervention action comprising diverting the call to a network announcement service, in accordance with examples of the present disclosure. At step 610, it is determined whether a CallerID of an incoming call is on a block list. If the CallerID is not determined to be on a block list, then the method proceeds to step 615. If the CallerID is determined to be on a block list, then the method proceeds to step 620. At step 615, in response to determining that the CallerID is not on the block list, the call is connected to the intended target device. At step 620, in response to determining that the CallerID is on the block list, the call is diverted to a network announcement service associated with the target device.

According to some examples or embodiments, a call intervention action may comprise rejecting the suspected flash call, and instead sending the user of the target device a 'missed call' SMS message, so that the user is able to return the call if appropriate. In some examples, the CallerID may be listed in the body of the SMS message, as opposed to the 'originating address' field, in order to disrupt any flash call applications installed on the target device. In some examples, the SMS message may also indicate that a potentially malicious call has been blocked.

According to some examples or embodiments, a call intervention action may comprise one or more of: hiding a CallerID of a suspected flash call so that the required OTP for 2FA is not provided, modifying a CallerID of a suspected flash call so that the flash call service provider is not able to deliver the correct OTP for 2FA.

Examples and embodiments provide a method for blocking a flash call at a target device, the method comprising: determining a risk that a call is a flash call; determining that the risk is in a first risk category; and in response to determining that the risk is in the first risk category: performing one or more call intervention actions, the one or more call intervention actions operable to prevent the flash call from being received by the device.

In some examples or embodiments the one or more call intervention actions comprises delaying establishment of the call by a first duration.

Some examples or embodiments further comprise providing a ringing indication to a caller prior to routing the call to a called user equipment.

In some examples or embodiments providing the ringing indication to the caller comprises sending one of a Session Initiation Protocol, SIP, 183 session progress message, or an SIP 180 ringing message.

In some examples or embodiments the one or more call intervention actions comprises: blocking establishment of the call; and monitoring to determine whether a short message service, SMS, message is sent to the target device in a predefined period following the blocked call, wherein caller ID of the SMS message is the same as a caller ID of the blocked call.

Some examples or embodiments further comprise, if it is determined that the SMS message is sent in the predefined period following the blocked call, updating a flash call risk determination model.

In some examples or embodiments the one or more call intervention actions comprises diverting the call.

In some examples or embodiments diverting the call comprises connecting the call to a voicemail service.

In some examples or embodiments diverting the call comprises connecting the call to a network announcement service.

In some examples or embodiments determining that the risk is in the first risk category comprises comparing a risk score to a threshold.

Some examples or embodiments further comprise: determining that the risk is in a second risk category; and in response to determining that the risk is in the second risk category, blocking establishment of a connection with the target device.

Some examples or embodiments further comprise: determining that the risk is in a third risk category; and in response to determining that the risk is in the third risk category, permitting the call to establish a connection with a target device without intervention.

In some examples or embodiments determining a riskthat a call is a flash call comprises: receiving a set of Call Detail Records, CDRs, and a set of call network data; accessing one or more CDR from the set of CDRs; determining, based on one or more characteristic features in the one or more CDR, a flash call classification associated with the one or more CDR.

Examples and embodiments provide a computer-readable storage medium comprising instructions which, when executed by a computer, cause the computer to carry out the steps of the method as described herein.

Examples and embodiments provide a system for blocking flash calls, the system comprising one or more processors operable to execute instructions, the instructions when executed to cause the processor to: determine a risk that a call is a flash call; determine that the risk is in a first risk category; and in response to determining that the risk is in the first risk category: perform one or more call intervention actions.

Examples and embodiments provide a method for training a machine learning model for identifying flash calls in a set of Call Detail Records, CDRs, the method comprising: receiving a set of CDRs and a set of call network data; creating a first training set, the first training set comprising a first subset of CDRs from the set of CDRs and a second subset of CDRs from the set of CDRs, wherein the first subset of CDRs comprises a plurality of CDRs known to represent flash calls, and the second subset of CDRs comprises a plurality of CDRs known to represent legitimate calls; determining one or more characteristic features in the first training set, the one or more characteristic features comprising a first characteristic feature associated with the first subset of CDRs and a second characteristic feature associated with the second subset of CDRs, wherein the first characteristic feature is different from the second characteristic feature.

In some examples or embodiments the set of Call Detail Records comprises fields corresponding to one or more of a call origin, a call duration, a call frequency, and a network characteristic.

In some examples or embodiments the one or more characteristic features comprises one or more of a subscriber duration, a network duration, a post dial delay, and an answered call status.

In some examples or embodiments the one or more characteristic features comprises one or more of a quantity of calls originating from a device, and a quantity of calls received by the device.

In some examples or embodiments the one or more characteristic features comprises one or more of a call release direction and a call release cause.

In some examples or embodiments determining one or more characteristic features comprises identifying a flash call number distribution in the set of CDRs.

In some examples or embodiments identifying a flash call number distribution in the set of CDRs comprises determining at least one of an adjacent neighbours distance, a common prefix, a cycle-based Gauss-Newton (CGN) sequentially, and an orderliness.

In some examples or embodiments the at least one of the first subset of CDRs and the second subset of CDRs comprises a plurality of CDRs having a common prefix.

Examples and embodiments provide a computer-readable storage medium comprising instructions which, when executed by a computer, cause the computer to carry out the steps of the method as described herein.

Examples and embodiments provide a method for identifying flash calls in a set of Call Detail Records, CDRs, the method comprising: receiving a set of CDRs and a set of call network data; accessing one or more CDR from the set of CDRs; determining, based on one or more characteristic features in the one or more CDR, a flash call classification associated with the one or more CDR.

In some examples or embodiments determining a flash call classification associated with the one or more CDR comprises applying one or more of a decision tree, a neural network, a support vector machine, and an ensemble learning technique.

In some examples or embodiments the one or more CDRs from the set of CDRs comprise a plurality of CDRs having a common prefix.

Examples and embodiments provide a computer-readable storage medium comprising instructions which, when executed by a computer, cause the computer to carry out the steps of the method as described herein.

Examples and embodiments provide a system for training a machine learning model for identifying flash calls in a set of Call Detail Records, CDRs, the system comprising: a data collection module, the data collection module operable to receive a set of CDRs and a set of call network data; a training set generation module, the training set generation module operable to create a first training set, the first training set comprising a first subset of CDRs from the set of CDRs and a second subset of CDRs from the set of CDRs, wherein the first subset of CDRs comprises a plurality of CDRs known to represent flash calls, and the second subset of CDRs comprises a plurality of CDRs known to represent legitimate calls; a preprocessing module, the preprocessing module operable to determine one or more characteristic features in the first training set, the one or more characteristic features comprising a first characteristic feature associated with the first subset of CDRs and a second characteristic feature associated with the second subset of CDRs, wherein the first characteristic feature is different from the second characteristic feature.

Examples and embodiments provide a system for identifying flash calls in a set of Call Detail Records, CDRs, the system comprising: a data collection module, the data collection module operable to receive a set of CDRs and a set of call network data; and a machine leaning model module, the machine learning model module operable to: access one or more CDR from the set of CDRs; and determine, based on one or more characteristic features in the one or more CDR, a flash call classification associated with the one or more CDR.

All of the features disclosed in this specification (including any accompanying claims, abstract, and drawings) may be combined in any combination, except combinations where some features are mutually exclusive. Each feature disclosed in this specification, including any accompanying claims, abstract, and drawings, may be replaced by alternative features serving the same, equivalent, or similar purpose, unless expressly stated otherwise. Thus, unless expressly stated otherwise, each feature disclosed in one example of a generic series of equivalent or similar features.

The present teachings are not restricted to the details of any of the foregoing examples. Any novel combination of the features disclosed in this specification (including any accompanying claims, abstract, and drawings) may be envisaged. The claims should not be construed to cover merely the foregoing examples, but also any variants which fall within the scope of the claims.

## Claims

1. A method for training a machine learning model for identifying flash calls in a set of Call Detail Records, CDRs, the method comprising:
receiving a set of CDRs and a set of call network data;
creating a first training set, the first training set comprising a first subset of CDRs from the set of CDRs and a second subset of CDRs from the set of CDRs, wherein the first subset of CDRs comprises a plurality of CDRs known to represent flash calls, and the second subset of CDRs comprises a plurality of CDRs known to represent legitimate calls;
determining one or more characteristic features in the first training set, the one or more characteristic features comprising a first characteristic feature associated with the first subset of CDRs and a second characteristic feature associated with the second subset of CDRs, wherein the first characteristic feature is different from the second characteristic feature.

2. The method of claim 1, wherein the set of Call Detail Records comprises fields corresponding to one or more of a call origin, a call duration, a call frequency, and a network characteristic.

3. The method of claim 1 or 2, wherein the one or more characteristic features comprises one or more of a subscriber duration, a network duration, a post dial delay, and an answered call status.

4. The method of any of claims 1 to 3, wherein the one or more characteristic features comprises one or more of a quantity of calls originating from a device, and a quantity of calls received by the device.

5. The method of any of claims 1 to 4, wherein the one or more characteristic features comprises one or more of a call release direction and a call release cause.

6. The method of any of claims 1 to 5, wherein determining one or more characteristic features comprises identifying a flash call number distribution in the set of CDRs.

7. The method of claim 6, wherein identifying a flash call number distribution in the set of CDRs comprises determining at least one of an adjacent neighbours distance, a common prefix, a cycle-based Gauss-Newton (CGN) sequentially, and an orderliness.

8. The method of any of claims 1 to 5, wherein the at least one of the first subset of CDRs and the second subset of CDRs comprises a plurality of CDRs having a common prefix.

9. A computer-readable storage medium comprising instructions which, when executed by a computer, cause the computer to carry out the steps of the method of any of claims 1 to 8.

10. A method for identifying flash calls in a set of Call Detail Records, CDRs, the method comprising:
receiving a set of CDRs and a set of call network data;
accessing one or more CDR from the set of CDRs;
determining, based on one or more characteristic features in the one or more CDR, a flash call classification associated with the one or more CDR.

11. The method of claim 10, wherein determining a flash call classification associated with the one or more CDR comprises applying one or more of a decision tree, a neural network, a support vector machine, and an ensemble learning technique.

12. The method of claim 10 or 11, wherein the one or more CDRs from the set of CDRs comprise a plurality of CDRs having a common prefix.

13. A computer-readable storage medium comprising instructions which, when executed by a computer, cause the computer to carry out the steps of the method of any of claims 8 to 12.

14. A system for training a machine learning model for identifying flash calls in a set of Call Detail Records, CDRs, the system comprising:
a data collection module, the data collection module operable to receive a set of CDRs and a set of call network data;
a training set generation module, the training set generation module operable to create a first training set, the first training set comprising a first subset of CDRs from the set of CDRs and a second subset of CDRs from the set of CDRs, wherein the first subset of CDRs comprises a plurality of CDRs known to represent flash calls, and the second subset of CDRs comprises a plurality of CDRs known to represent legitimate calls;
a preprocessing module, the preprocessing module operable to determine one or more characteristic features in the first training set, the one or more characteristic features comprising a first characteristic feature associated with the first subset of CDRs and a second characteristic feature associated with the second subset of CDRs, wherein the first characteristic feature is different from the second characteristic feature.

15. A system for identifying flash calls in a set of Call Detail Records, CDRs, the system comprising:
a data collection module, the data collection module operable to receive a set of CDRs and a set of call network data; and
a machine leaning model module, the machine learning model module operable to:
access one or more CDR from the set of CDRs; and
determine, based on one or more characteristic features in the one or more CDR, a flash call classification associated with the one or more CDR.
